# EUROPÄISCHE PATENTSCHRIFT

(11) **EP 3 238 568 B1**
(45) Veröffentlichungstag und Bekanntmachung des Hinweises auf die Patenterteilung: **03.04.2024**
(21) Anmeldenummer: 17176025.9
(22) Anmeldetag: 03.02.2011
(51) Int. Cl.: A47B 88/427

(54) **SCHUBLADENSYSTEM**
DRAWER SYSTEM
SYSTÈME DE TIROIR

(30) Priorität: 03.02.2010 AT 1452010
(43) Veröffentlichungstag der Anmeldung: 01.11.2017
(62) Teilanmeldung aus: 11707063.1
(73) Patentinhaber: Julius Blum GmbH, 6973 Höchst (AT)
(72) Erfinder: HÄMMERLE, Hermann, 6890 Lustenau (AT)
(74) Vertreter: Torggler & Hofmann Patentanwälte - Innsbruck

(56) Entgegenhaltungen:
- EP-A1- 0 421 458
- AT-U1- 7 648
- DE-U1-202005 005 489
- DE-U1-202005 018 788

## Beschreibung

Die Erfindung betrifft eine Anordnung mit einer Schublade und einer Ausziehführung für die Schublade, wobei die Schublade ein Schubladenbehältnis und zwei mit dem Behältnis verbindbare Frontblende aufweist und die Schublade über eine Befestigungsvorrichtung lösbar an der Ausziehführung befestigbar ist und die Ausziehführung zumindest eine hintere und eine vordere Einrastposition zum Befestigen der Schublade aufweist. Weiters betrifft die Erfindung ein Möbel mit einem Möbelkorpus und zumindest einer solchen Anordnung.

Derartige Vorrichtungen gehen z. B. aus der DE 20 2005 018 788 U1 und der DE 20 2005 005 489 U1 hervor. Die erstgenannte Schrift zeigt eine Teleskopführung für ein in einem Möbelkorpus verschiebbar angeordnetes Möbelteil. Darin sind Rastnasen und Aussparungen derart angeordnet, dass entweder nur die erste Rastnase in die erste Aussparung oder die zweite Rastnase in die zweite Aussparung eingreift.

Für das Zusammenbauen von Möbeln werden von den Möbel- bzw. Beschlägeherstellern meist standardisierte Komponenten geliefert, die dann von Monteuren an Ort und Stelle relativ schnell und einfach zusammengebaut werden können. So werden meist einheitliche Ausziehführungen für Schubladen zur Verfügung gestellt, die am Möbelkorpus angebracht werden. Meist befindet sich am Möbelkorpus bereits ein vorgebohrtes Bohrbild, um die Positionierung der Ausziehführung entsprechend später anzubringender Schubladen zu ermöglichen. Dabei muss beim Stand der Technik immer berücksichtigt werden, welche Art der Schublade später an der Ausziehführung angebracht wird. Das heißt, wenn ein Frontauszug verwendet wird, bei dem die Frontblende in geschlossener Stellung am Möbelkorpus anschlägt, muss die Ausziehführung weiter vorne am Möbelkorpus angebracht werden. Ansonsten würde beim Anbringen der Schublade an der vormontierten Ausziehführung das Problem entstehen, dass eine vollkommen in Schließstellung befindliche Ausziehführung von der Schublade samt Frontblende gar nicht erreichbar wäre, da die Frontblende vor Erreichen der Befestigungsposition der Schublade an der Ausziehführung bereits am Möbelkorpus anstößt. Nur wenn der Monteur der Ausziehführungen vorher genau weiß, welcher Art die anzubringenden Schubladen sind, kann er entsprechend weiter vorne oder hinten die Ausziehführungen positionieren. Somit besteht eine Aufgabe der Erfindung darin, Ausziehführungen unabhängig vom Wissen über die später anbringbaren Schubladen am Möbelkorpus einheitlich positionieren zu können.

Ein weiteres Problem tritt insbesondere dann auf, wenn nachträglich die Anordnung der Schubladen verändert werden soll. Dann passen nämlich die einzelnen Schubladen nicht mehr mit den Positionen der Ausziehführungen zusammen und es müssten nachträglich die Ausziehführungen ausgebaut und an einer passenden Position wieder eingebracht werden.

Eine weitere Aufgabe der Erfindung besteht daher darin, ein einfaches und angepasstes Anbringen von Schubladen in Ausziehführungen zu ermöglichen. Insbesondere sollen die einzelnen Schubladen unabhängig von den Befestigungspositionen der Ausziehführungen an diesen anbringbar sein. Kein nachträgliches und umständliches Ummontieren von Ausziehführungen sollte nötig sein.

Dies wird gemäß vorliegender Erfindung durch die im unabhängigen Anspruch 1 angegebenen Merkmale erreicht. Demnach ist vorgesehen, dass die Schublade mit einer Frontblende für einen Frontauszug (erster Typ der Frontblende) oder einer Frontblende für einen Innenauszug (zweiter Typ der Frontblende) versehbar ist, wobei die jeweilige Schublade in Abhängigkeit des Frontblendentyps in der ersten oder zweiten Einrastposition verrastet bzw. befestigt ist. Dadurch müssen die Einrasttiefen nicht beispielsweise von Hand festgelegt werden oder es muss kein händisches Lösen einer Einraststellung der Schublade an der Ausziehführung erfolgen, sondern das reine Anbringen der Frontblende am Rest des Schubladenbehältnisses bedingt unmittelbar die Einrastposition der Schublade.

Bevorzugt kann diesbezüglich vorgesehen sein, dass eine Schublade mit einem ersten Frontblendentyp in der ersten Einrastposition und eine Schublade mit einem zweiten Frontblendentyp in der zweiten Einrastposition einrastbar ist. Erfindungsgemäß ist vorgesehen, dass nur eine der beiden Frontblendentypen einen direkten oder indirekten Anschlag aufweist, wobei die Einrastposition durch den Anschlag festgelegt wird, der an der Frontblende ausgebildet ist. Grundsätzlich müssen die Frontblenden gar keinen mechanischen Anschlag zur Veränderung der Einrastposition aufweisen. Es kann vielmehr auch vorgesehen sein, dass an der Schublade oder an der Ausziehführung beispielsweise eine spezielle elektronische Sensorik angeordnet ist, die erkennt bzw. detektiert, welche Art der Frontblende am Schubladenbehältnis angebracht ist. In Abhängigkeit des detektierten Frontblendentyps ist dann die Einrastposition mechanisch festlegbar bzw. änderbar.

Es kann weiters vorgesehen sein, dass die erste und/oder zweite Einrastposition automatisch in Abhängigkeit von einem an der Schublade anordenbaren, bewegbaren oder entfernbaren, Anschlag festgelegt ist, wobei die Lage des Anschlags in Abhängigkeit vom Typ der mit dem Schubladenbehältnis verbundenen Frontblende der Schublade festgelegt ist.

Insbesondere durch die Abhängigkeit der Einrastposition vom Frontblendentyp kann somit auch nachträglich ein Innenauszug - bei dem die Frontblende nicht am Möbelkorpus anschlägt und somit weiter in das Möbel reicht - gegen eine Schublade mit Frontauszug getauscht werden.

Bevorzugt ist vorgesehen, dass der entfernbare Anschlag an der Frontblende angeordnet ist. Somit ist dieser Anschlag entsprechend eines Frontblendentyps an der Frontblende selbst angeordnet, wodurch sozusagen die Einrastposition durch die Frontblende gesteuert wird.

Ganz besonders bevorzugt kann vorgesehen sein, dass die Frontblende ein vormontiertes Verbindungselement aufweist, über das die Frontblende mit dem Schubladenbehältnis verbindbar ist, wobei am Verbindungselement der entfernbare Anschlag angeordnet ist. Somit kann die Schublade ohne Frontblende einfach an der Ausziehführung in einer ersten Einrastposition befestigt werden. Wenn dann die Frontblende angebracht wird, wird bei einem Frontblendentyp in Form eines Innenauszugs die Einrastposition gelöst und die Schublade kann in eine weiter hinten liegende zweite Einrastposition geschoben werden.

Dementsprechend kann besonders bevorzugt vorgesehen sein, dass beim Befestigen der Schublade an der Ausziehführung der entfernbare Anschlag direkt an einem Begrenzungsfortsatz der Ausziehführung anschlägt und die Schublade in der ersten Einrastposition der Ausziehführung verrastet. Das heißt, dass beim Anbringen der Schublade der Anschlag an der Ausziehführung anschlägt, sodass die Schublade in einer ersten Einrastposition verrastet.

Alternativ kann auch vorgesehen sein, dass eine Übertragungsvorrichtung am Unterboden des Schubladenbehältnisses, vorzugsweise an einer Behältnisschiene, angeordnet ist und ein Verstellelement als indirekt betätigbaren Anschlag mit dem Begrenzungsfortsatz aufweist, das durch Kontakt mit dem Anschlag der Frontblende von einer ersten Stellung in eine zweite Stellung bewegbar ist, wobei das Verstellelement nur in der ersten Stellung beim Befestigen der Schublade am Begrenzungsfortsatz der Ausziehführung anschlägt. Wenn nun das Verstellelement beim Anbringen der Frontblende am Schubladenbehältnis in die zweite Stellung bewegt wird, schlägt das Verstellelement nicht mehr am Begrenzungsfortsatz an und die gesamte Schublade kann weiter in das Möbel hineinbewegt werden. Es kann auch vorgesehen sein, dass das Verstellelement an der Seitenwand der Schublade bewegbar gelagert ist, wobei es in Abhängigkeit von der in die Seitenwand eingesteckten Frontblende in die erste oder zweite Stellung gebracht wird. Beispielsweise kann vorgesehen sein, dass in Abhängigkeit einer in eine Seitenwand der Schublade eingesteckten Frontblende ein Anschlag, vorzugsweise nach unten, ausfährt und entsprechend eine Schubladenpositionierung weiter vorne "erzwingt". Sobald die Frontblende entfernt oder getauscht wird, zieht sich der Anschlag wieder in das innere der Seitenwand zurück und die Schublade kann wieder ganz hinten an der Ausziehführung positioniert und befestigt werden.

Mit anderen Worten gibt es somit grundsätzlich zwei Varianten für das Festlegen des Anschlages. Die erste Variante ist die Ausführung mit einem indirekt bewegbaren Anschlag, der über ein Verstellelement in Abhängigkeit von der Frontblende zwischen zwei unterschiedlichen Positionen hin- und herbewegt werden kann. Die zweite Variante sieht vor, dass ein an der Frontblende angeordneter Anschlag direkt die Einrastposition festlegt. Demgemäß ist die erste und/oder zweite Einrastposition automatisch in Abhängigkeit von einem an der Schublade anordenbaren, bewegbaren oder entfernbaren, Anschlag festgelegt. Im Falle der ersten Variante ist der Anschlag zwischen zwei Positionen bewegbar. Im Falle der zweiten Variante ist einmal ein direkter Anschlag vorhanden und einmal nicht vorhanden (also entfernt).

Dadurch, dass die Lage des Anschlags in Abhängigkeit vom Typ der mit dem Schubladenbehältnis verbundenen Frontblende der Schublade festgelegt ist, ist für beide Varianten der Vorteil gegeben, dass die Positionstiefe der Schublade an der Ausziehführung an die Frontblende angepasst ist bzw. von dieser abhängig ist. Diesbezüglich sei darauf hingewiesen, dass die erste und zweite Einrastposition zueinander in der Tiefe des Möbels versetzt angeordnet sind. D. h., dass die Einrastpositionen zueinander unterschiedlichen Aufschiebtiefen für die Schublade an der Ausziehführung bilden.

Weiters kann bevorzugt vorgesehen sein, dass die Ausziehführung eine mit der Schublade verbindbare Ladenschiene und eine Korpusschiene zum Anbringen der Ausziehführung an einem Möbelkorpus aufweist, wobei der Begrenzungsfortsatz der Ausziehführung an der Ladenschiene angeordnet ist. Gemäß einer weiteren bevorzugten Ausführungsvariante kann vorgesehen sein, dass die Schublade eine Behältnisschiene aufweist, wobei die Befestigungsvorrichtung die Behältnisschiene an der Ladenschiene der Ausziehführung lösbar hält. Diese Behältnisschiene ist bevorzugt am Unterboden der Schublade angeordnet.

Für ein Möbel kann besonders bevorzugt vorgesehen sein, dass die erste Schublade einen Frontblendentyp für einen Frontauszug in Form einer erhöhten Frontblende aufweist, die die zweite, mit einem Frontblendentyp für einen Innenauszug versehene Schublade, überdeckt, wobei das Behältnis der zweiten Schublade an der ersten, weiter innenliegenden Einrastposition der einen Ausziehführung verrastet ist und das Behältnis der ersten Schublade an der zweiten, weiter vorne liegenden Einrastposition der anderen Ausziehführung verrastet ist. Überdecken heißt dabei, dass von vorne gesehen nur die Frontblende des Frontauszuges zu sehen ist, während die Frontblenden der Innenauszüge sich dahinter, sozusagen innenliegend verstecken.

Insbesondere kann dazu bevorzugt vorgesehen sein, dass die übereinander am Möbelkorpus befestigten Ausziehführungen in der gleichen vertikalen Position am Möbelkorpus befestigt sind. Die gleiche vertikale Position bedeutet dabei, dass die Ausziehführungen (im Speziellen dessen Korpusschiene) unversetzt übereinander am Möbelkorpus angeordnet sind. Mit anderen Worten heißt das, dass die einzelnen Ausziehführungen bzw. dessen Korpusschienen im gleichen horizontalen Abstand von der Möbelrückwand bzw. deren Möbelkorpusvorderseite angeordnet sind, wobei sie nicht entsprechend später anbringbarer Schubladen versetzt am Möbelkorpus montiert werden müssen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine schematische Darstellung einer Ausziehführung mit den Befestigungsbereichen,
- Fig. 2: eine schematische Darstellung einer Ausziehführung mit angebrachtem Schubladenbehältnis und Detailausschnitte der Befestigungsbereiche,
- Fig. 3: eine schematische Darstellung der Ausziehführung samt Schubladenbehältnis mit Frontblende und Detailausschnitte der Befestigungsbereiche,
- Fig. 4: eine schematische Darstellung der Ausziehführung samt Schubladenbehältnis und Frontblende in Form eines Innenauszuges und Detailausschnitte der Befestigungsbereiche,
- Fig. 5: die Schublade mit Innenauszug in kompletter Schließstellung,
- Fig. 6: eine schematische Darstellung eines Möbels mit verschiedenen Schubladenvarianten,
- Fig. 7: eine Explosionsdarstellung eines Schubladenbehältnisses mit Übertragungsvorrichtung und Ausziehführung,
- Fig. 8: eine Unteransicht einer am Unterboden einer Schublade montierten Übertragungsvorrichtung,
- Fig. 9: die Übertragungsvorrichtung in unbetätigter Schließstellung,
- Fig. 10: eine Unteransicht einer Übertragungsvorrichtung in betätigter Schließstellung,
- Fig. 11: eine Unteransicht gemäß Fig. 9 mit Ausziehführung,
- Fig. 12: einen Schnitt durch Fig. 11,
- Fig. 13: eine Seitenansicht einer Schublade mit Frontauszug,
- Fig. 14: eine Unteransicht gemäß Fig. 10 mit Ausziehführung,
- Fig. 15: einen Schnitt durch Fig. 14 und
- Fig. 16: eine Seitenansicht einer Schublade mit Innenauszug.

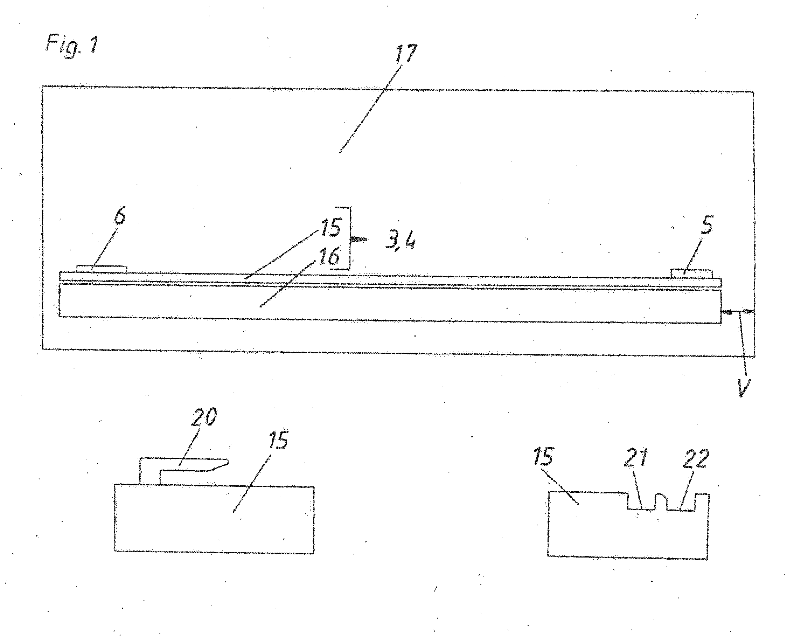

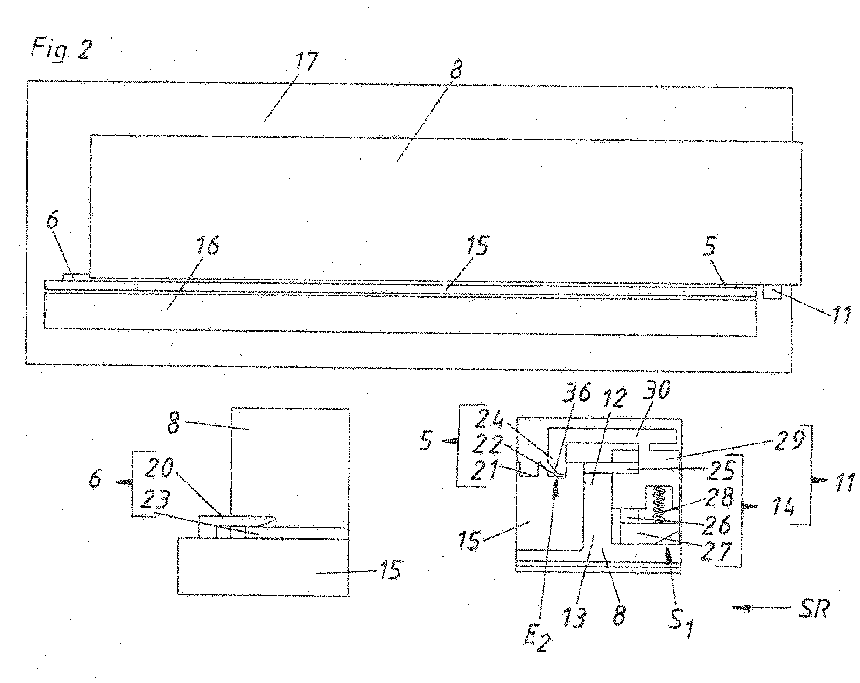

In Fig. 1 ist schematisch dargestellt, wie eine Ausziehführung 3 bzw. 4 an einem Möbelkorpus 17 befestigt ist. Dabei ist die Korpusschiene 16 am Möbelkorpus 17 montiert, während die Ladenschiene 15 an der Korpusschiene 16 verschieblich gelagert ist. Die Ladenschiene 15 weist zumindest Teile der Befestigungsvorrichtungen 5 und 6 auf. Die Befestigungsvorrichtung 6 besteht dabei zum einen aus der Haltenase 20, die an der Ladenschiene 15 befestigt ist, und einem Führungselement 23 (siehe Fig. 2), welches an der Schublade 1 bzw. 2 angeordnet ist. Beim Anbringen einer Schublade 1 bzw. 2 an der Ausziehführung 3 bzw. 4 bewegt sich das Führungselement 23 zwischen Haltenase 20 und Ladenschiene 15 hinein, sodass eine Vertikalbewegung durch den Formschluss zwischen den Teilen 15, 23 und 20 gegeben ist. Im vorderen Bereich der Ladenschiene 15 ist die Befestigungsvorrichtung 5 ausgebildet. Diese ist in Form von zwei Einrastvertiefungen 21 und 22 ausgebildet, in welche eine an der Schublade 1 bzw. 2 angeordnete Einrastnase 24 einrasten kann. Nach dem Einrasten der Einrastnase 24 ist zwischen den Einrastvertiefungen 21 und 22 und der Einrastnase 24 in Öffnungsrichtung der Schublade ein Formschluss gegeben, welcher durch Anheben der Schublade lösbar ist. Somit kann durch einfaches schiebendes Aufsetzen der Schublade 1 bzw. 2 auf der Ladenschiene 15 mittels der Befestigungsvorrichtungen 5 und 6 ein formschlüssiges Befestigen der Schublade 1 bzw. 2 an der Ausziehführung 3 bzw. 4 erfolgen, das durch Anheben und Herausziehen der Schublade 1 bzw. 2 wieder gelöst werden kann.

Wie in Fig. 2 im rechten unteren Bild dargestellt, ist am Unterboden 13 des Schubladenbehältnisses 8 eine Übertragungsvorrichtung 11 angeordnet. Diese Übertragungsvorrichtung 11 dient in der dargestellten ersten Stellung S₁ dazu, mittels des Übertragungsvorrichtungsanschlags 25 die Bewegung des Schubladenbehältnisses 8 zur Ladenschiene 15 durch Anschlagen am Begrenzungsfortsatz 12 zu begrenzen. Da das Betätigungselement 27 in dieser Stellung S₁ nicht betätigt ist, verbleibt das gesamte Verstellelement 14 (bestehend aus Betätigungselement 27, Feder 28, Verbindeteil 26 und Übertragungsvorrichtungsanschlag 25) in der Stellung S₁ gegenüber dem Basisteil 29 der Übertragungsvorrichtung 11. Wie aus dieser Darstellung ersichtlich, ist am Basisteil 29 der Übertragungsvorrichtung 11 über einen bevorzugt leicht federnden Verbindungsteil 30 die Einrastnase 24 vorzugsweise einstückig verbunden. Das Schubladenbehältnis 8 gelangt durch Bewegen des Schubladenbehältnisses 8 in Schließrichtung SR in die in Fig. 2 dargestellte Position. Dabei gleitet der schräge Bereich 36 der Einrastnase 24 unter Verbiegung des Verbindungsteiles 30 im Bereich des Begrenzungsfortsatzes 12 an der Ladenschiene 15 entlang, wobei mit Erreichen der Einrastvertiefung 22 die Einrastnase 24 in die Einrastposition E₂ einrastet.

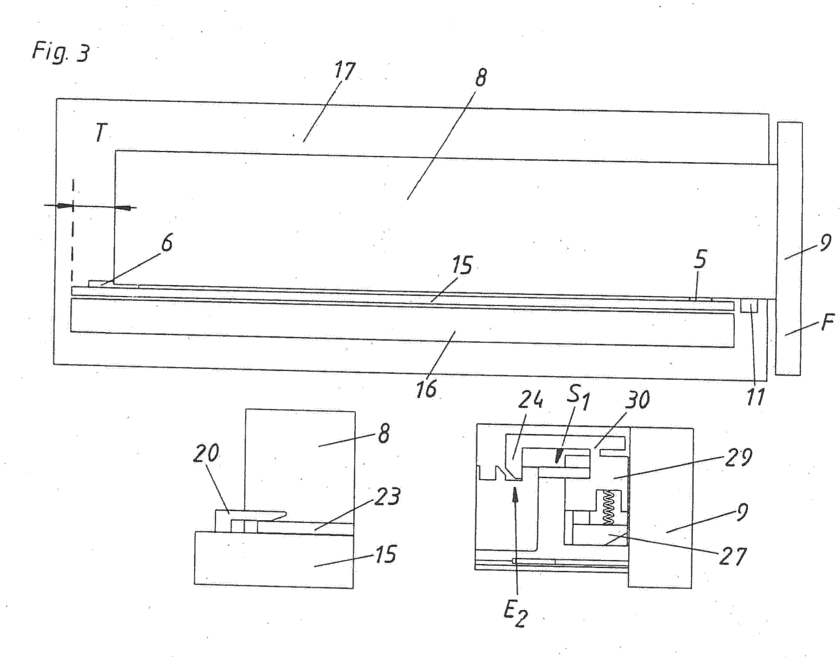

Wie dann in Fig. 3 dargestellt, ist somit eine leicht geöffnete Tiefenposition T des Schubladenbehältnisses 8 an der Ausziehführung 3 bzw. 4 gegeben, wodurch eine Frontblende 9 eines Frontauszuges F problemlos an dem noch genügend geöffneten Schubladenbehältnis 8 angebracht werden kann. Somit kann in dieser Schließstellung S₁ der Übertragungsvorrichtung 11 bzw. Einrastposition E₂ der Einrastnase 24 jede beliebige Frontblende 9 angebracht werden.

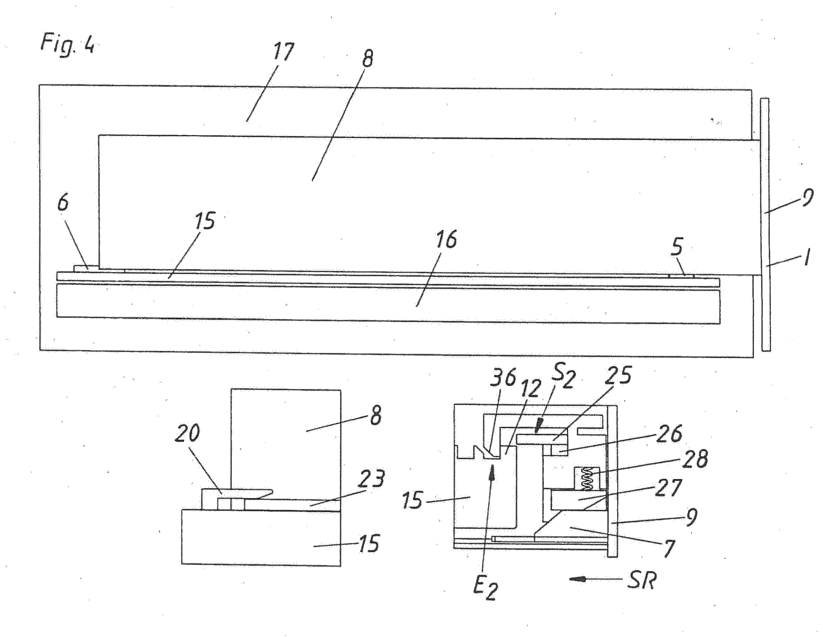

Wenn nun an dem Schubladenbehältnis 8 gemäß Fig. 2 eine Frontblende 9 für einen Innenauszug I - wie in Fig. 4 ersichtlich - angebracht wird, ist ein weiteres Hineinbewegen der gesamten Schublade 1 bzw. 2 in Schließrichtung SR aber gewünscht. Um nun den Übertragungsvorrichtungsanschlag 25 zu lösen, ist an der Frontblende 9 des Innenauszuges I dazu ein Anschlag 7 angeordnet, der nach Gleiten entlang entsprechender Schrägflächen das Betätigungselement 27 von der Stellung S₁ in die Stellung S₂ gegen die Federkraft der Feder 28 bewegt, wodurch sich in weiterer Folge das Verbindeteil 26 und der Übertragungsvorrichtungsanschlag 25 des Verstellelementes 14 vom Begrenzungsfortsatz 12 der Ladenschiene 15 wegbewegt und eine Bewegung des Schubladenbehältnisses 8 in Schließrichtung SR gegenüber der Ladenschiene 15 ermöglicht wird.

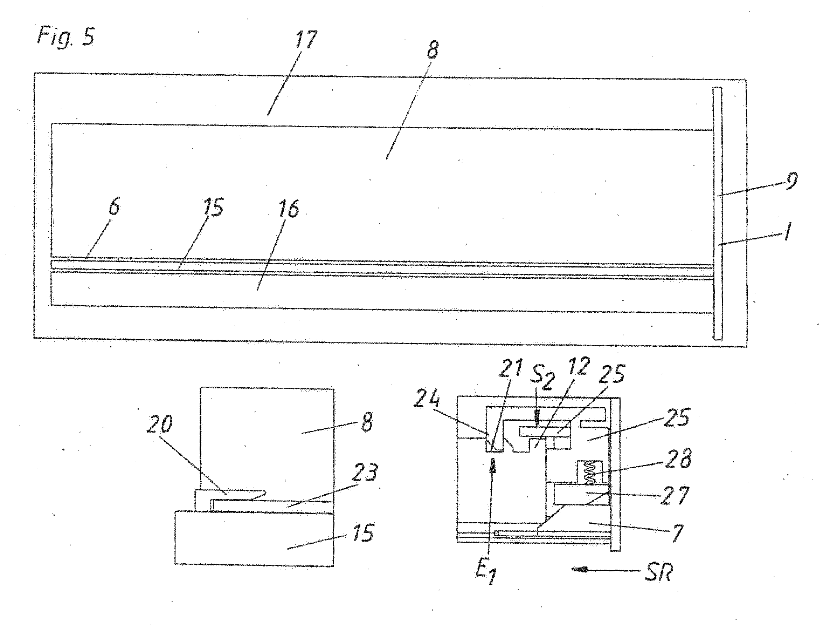

Bei einer solchen Bewegung in Schließrichtung SR (Aufsteckrichtung der Frontblende 9) gleitet die Schrägfläche 36 der Einrastnase 24 entlang der schrägen Fläche zwischen den Einrastvertiefungen 22 und 21 von der Einrastposition E₂ in die Einrastposition E₁. In dieser Stellung (siehe Fig. 5) ist somit das Schubladenbehältnis 8 gegenüber der Ladenschiene 15 in kompletter Schließstellung, in welcher auch das Führungselement 23 gegenüber der Haltenase 20 nicht bzw. kaum mehr weiterbewegt werden kann.

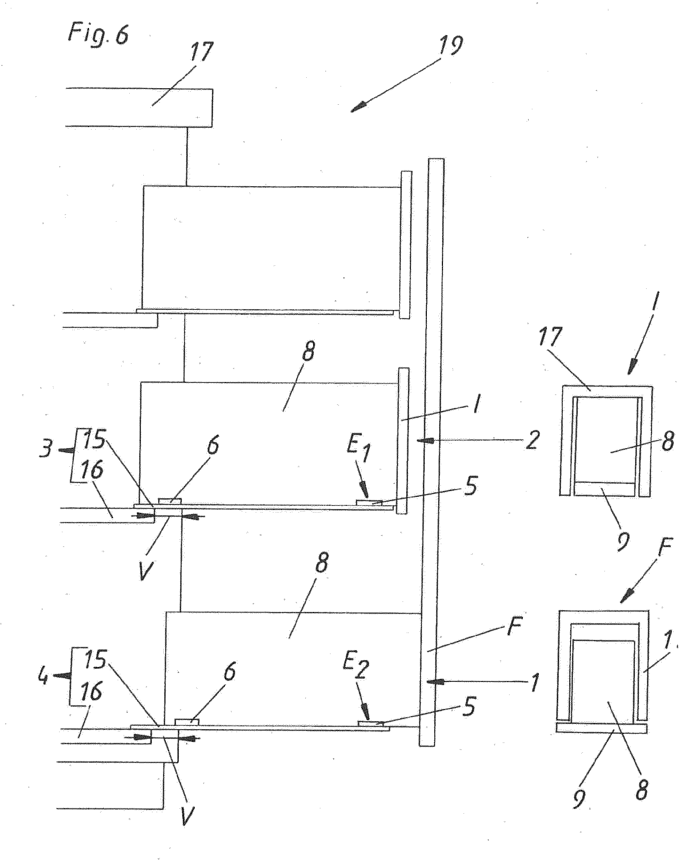

Wie aus Fig. 6 ersichtlich, ist die Korpusschiene 16 der Ausziehführung 3 und der Ausziehführung 4 in gleicher vertikaler Position V am Möbelkorpus 17 des Möbels 19 angebracht. Trotz dieser unversetzten Anordnung der Ausziehführungen 3 und 4 können Schubladen 1 und 2 mit unterschiedlichen Auszugstypen (Innenauszug I, Frontauszug F) angebracht werden, ohne dass eine Kollision zwischen den Frontblenden 9 der einzelnen Schubladen 1 bzw. 2 in kompletter Offenstellung oder kompletter Schließstellung zu befürchten ist. Durch die unterschiedlichen Einrastpositionen E₁ und E₂ kann die Schublade 2 mit der Frontblende 9 des Innenauszuges I in voll ausgezogenem Zustand gar nicht an der Frontblende F der Schublade 1 anstoßen. Aufgrund der erfindungsgemäßen Befestigung der einzelnen Schubladen 1 und 2 ist ein Tauschen der einzelnen Schubladen 1 und 2 problemlos möglich. Durch ein Tauschen der einzelnen Frontblenden 9 können die standardisierten Schubladenbehältnisse 8 von ihrer vorher eingenommenen Einrastposition E₁ bzw. E₂ wechseln.

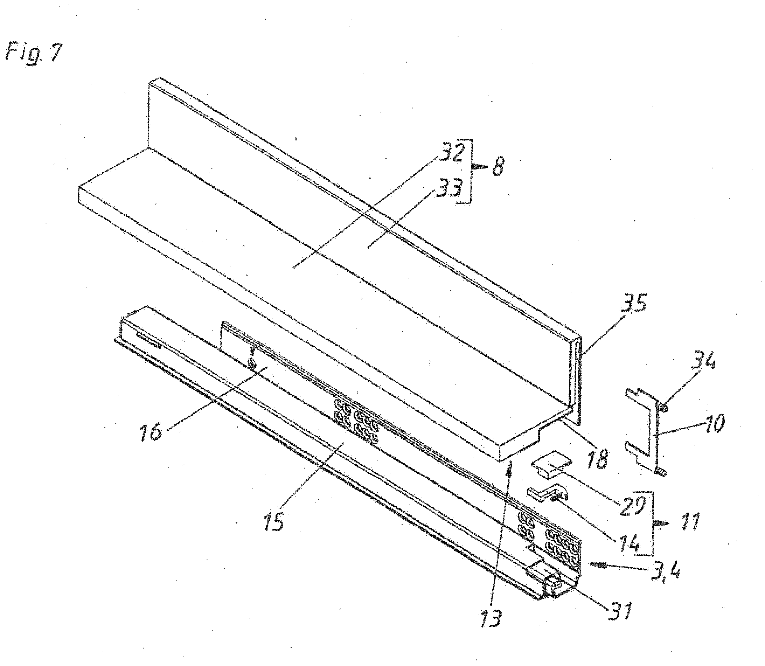

In Fig. 7 ist eine Ausziehführung 3 bzw. 4 dargestellt, welche im Wesentlichen aus der Ladenschiene 15, der Korpusschiene 16 und einer dazwischen angeordneten Mittelschiene 31 besteht. Die hier nur teilweise dargestellte Schublade 1 bzw. 2 besteht im Wesentlichen aus der Schubladenzarge 33 und dem Schubladenboden 32. In der Seitenwand bzw. Schubladenzarge 33 ist eine Aufnahme 35 für das Verbindungselement 10 vorgesehen. Am Unterboden 13 des Schubladenbehältnisses 8 kann im Bereich einer Behältnisschiene 18 das Basisteil 29 der Übertragungsvorrichtung 11 befestigt werden. Das Verbindungselement 10 kann über Befestigungsfortsätze 34 (beispielsweise Dübel) mit einer hier nicht dargestellten Frontblende 19 verbunden sein.

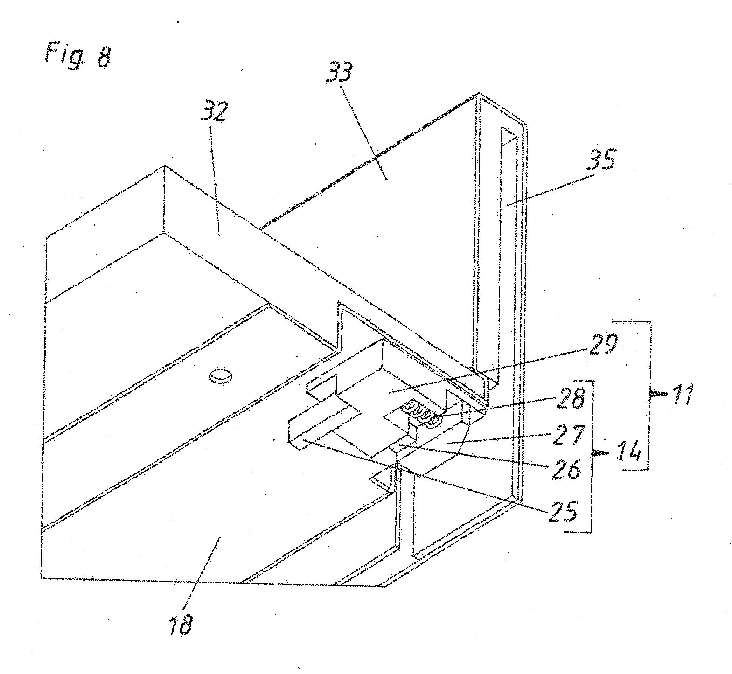

In Fig. 8 ist in Unteransicht das an der Behältnisschiene 18 angeordnete Übertragungselement 11 ersichtlich. Im Basisteil 29 des Übertragungselementes 11 ist dabei das Verstellelement 14 von Schließstellung S₁ in Schließstellung S₂ bewegbar angeordnet.

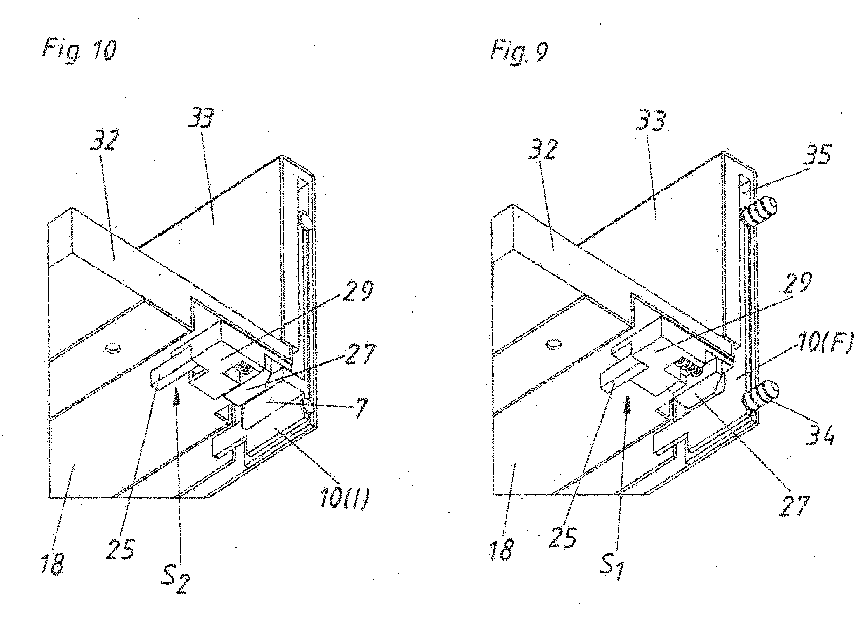

In Fig. 9 ist das Verbindungselement 10 eines Frontauszuges F in die Aufnahme 35 des Schubladenbehältnisses 8 eingeführt, wobei das Betätigungselement 27 nicht betätigt wird, wodurch der Übertragungsvorrichtungsanschlag 25 in der Stellung S₁ verbleibt.

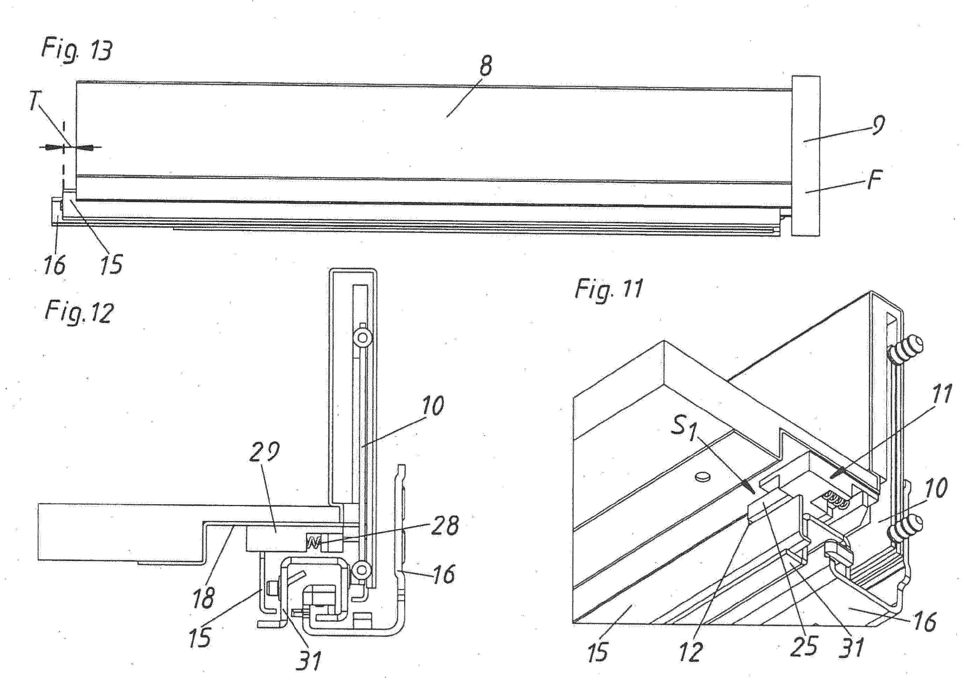

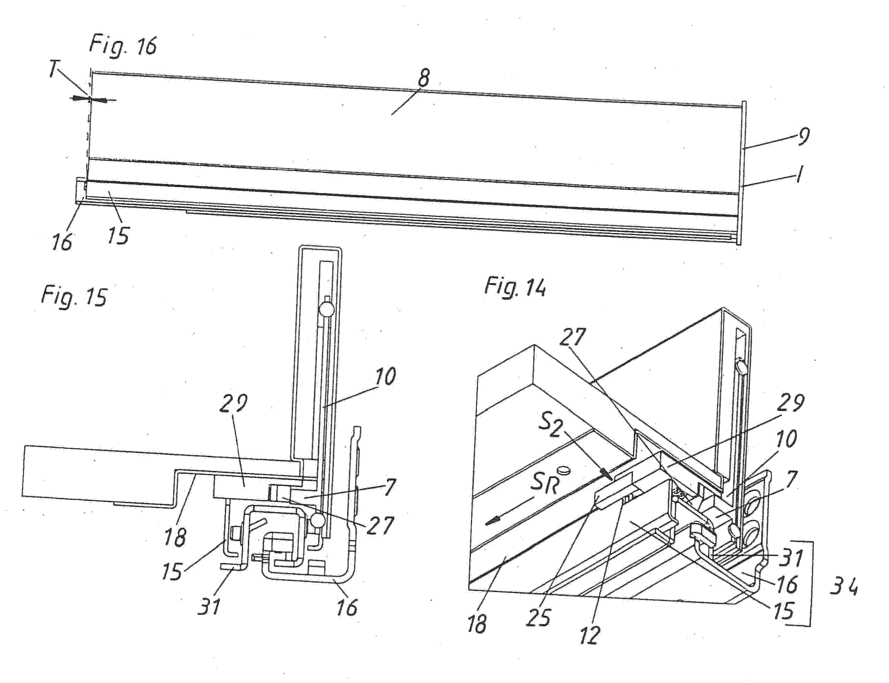

Demgegenüber ist in Fig. 10 die Frontblende 10 eines Innenauszuges I mit Anschlag 7 eingeführt, wodurch das Verstellelement 14 in die Stellung S₂ gelangt. Wie dazu passend in Fig. 14 ersichtlich, schlägt in dieser Stellung S₂ der Übertragungsvorrichtungsanschlag 25 nicht mehr am Begrenzungsfortsatz 12 der Ladenschiene 15 an, wodurch eine Bewegung des Schubladenbehältnisses 8 in Schließrichtung SR gegenüber der Ladenschiene 15 ermöglicht wird. Die Verstellung erfolgt durch den bevorzugt einstückig mit dem Verbindungselement 10 ausgebildeten Anschlag 7. Demgegenüber ist in Fig. 11 das Verstellelement 14 in Stellung S₁ gezeigt, in welcher der Übertragungsvorrichtungsanschlag 25 am Begrenzungsfortsatz 12 der Ladenschiene 15 anschlägt.

Somit ist durch die hier vorliegende Erfindung eine Anordnung bzw. ein Möbel 19 gezeigt, bei dem eine Schublade 1, 2 an einer Ausziehführung 3, 4 in einer nicht gänzlich geschlossenen Zwischenstellung angebracht werden kann, da ein Riegel 25 ein Anbringen der Schublade 1 bzw. 2 "ganz hinten" an der Ladenschiene 15 verhindert und somit die Schublade 1 bzw. 2 beim erstmaligen Anbringen (ohne Frontblende 10) nur in der vorderen Endposition E₂ an der Ladenschiene 15 der Ausziehführung 3 bzw. 4 angebracht werden kann. Erst mit dem Anbringen der Frontblende 10 entscheidet sich, ob der Riegel 25 gelöst wird und damit die Schublade 1 bzw. 2 gegenüber der Ladenschiene 15 in die komplette Schließstellung (Endposition E₁) gelangen kann. Somit steuert der Frontblendentyp F oder I die Einrastposition E₁ oder E₂ der Schublade 1 bzw. 2 an der Ausziehführung 3 bzw. 4.

Zusammenfassend wird es mit der hierin beschriebenen Erfindung ermöglicht, eine Schublade in Form eines Innenauszug oder eines Frontauszugs unterschiedlich tief auf der Ausziehführung, insbesondere dessen Ladenschiene, zu verrasten. Dazu ist an der Schublade ein sogenannter Tab-Stop vorgesehen, der direkt an der Frontblende oder als von der Frontblende betätigbarer Anschlag ausgebildet ist. Der Anschlag wirkt als Positionierhilfe der Schublade in unterschiedlich tiefen Einrastpositionen auf der Ausziehführung. Die Einrastposition ist dabei abhängig vom Positionieranschlag der Schublade, der wiederum von der Art der Frontblende abhängig ist. Im Speziellen kann der Positionieranschlag entweder direkt an der Frontblende ausgebildet sein oder indirekt durch die Frontblende in seiner Position verstellbar sein.

## Patentansprüche

1. Anordnung mit einer Schublade (1, 2) und einer Ausziehführung (3, 4) für die Schublade (1, 2), wobei die Schublade (1, 2) ein Schubladenbehältnis (8) und zwei mit dem Behältnis (8) verbindbare Frontblenden (9) aufweist und die Schublade (1, 2) über eine Befestigungsvorrichtung (5, 6) lösbar an der Ausziehführung (3, 4) befestigbar ist und die Ausziehführung (3, 4) zumindest eine hintere und eine vordere Einrastposition (E₁, E₂) zum Befestigen der Schublade (1, 2) aufweist, **dadurch gekennzeichnet, dass** die Schublade (1, 2) mit einer Frontblende (9) für einen Frontauszug (F) oder einer Frontblende (9) für einen Innenauszug versehen ist, wobei nur eine der beiden Frontblenden (9) einen Anschlag (7) aufweist, wobei die jeweilige Schublade (1, 2) in Abhängigkeit der Frontblende (9) für den Innenauszug (I) oder der Frontblende (9) für den Frontauszug (F) in der hinteren (E₁) oder vorderen (E₂) Einrastposition verrastet bzw. befestigt ist, wobei die Einrastposition (E₁, E₂) durch den Anschlag (7) festgelegt wird, der an der Frontblende (9) ausgebildet ist.

2. Anordnung nach Anspruch 1, **dadurch gekennzeichnet, dass** die Einrastposition (E₁, E₂) durch den Anschlag (7) festgelegt wird, der an einem Verbindungselement (10) der Frontblende (9) ausgebildet ist.

3. Anordnung nach Anspruch 1 oder 2, **dadurch gekennzeichnet, dass** eine Schublade (1, 2) mit einer Frontblende für den Frontauszug (F) in der hinteren Einrastposition (E₁) und eine Schublade (1, 2) mit einer Frontblende für den Innenauszug (I) in der vorderen Einrastposition (E₂) einrastet.

4. Möbel (19) mit:
- einem Möbelkorpus (17) und
- zumindest einer Anordnung nach einem der Ansprüche 1 bis 3.

5. Möbel nach Anspruch 4, **dadurch gekennzeichnet, dass** die Anordnung eine erste Schublade (1) und eine zweite Schublade (2) und zwei übereinander am Möbelkorpus (17) befestigte Ausziehführungen (3, 4) aufweist, wobei die erste Schublade (1) eine Frontblende für den Frontauszug (F) in Form einer erhöhten Frontblende (9) aufweist, die die zweite, mit einer Frontblende für den Innenauszug (I) versehene Schublade (2), überdeckt, wobei das Behältnis (8) der zweiten Schublade (2) an der hinteren, weiter innenliegenden Einrastposition (E₁) der einen Ausziehführung (3) verrastet ist und das Behältnis (8) der ersten Schublade (1) an der vorderen, weiter vorne liegenden Einrastposition (E₂) der anderen Ausziehführung (4) verrastet ist.

6. Möbel nach Anspruch 4 oder 5, **dadurch gekennzeichnet, dass** die übereinander am Möbelkorpus (17) befestigten Ausziehführungen (3, 4) in der gleichen vertikalen Position (V) am Möbelkorpus (17) befestigt sind.

## Claims

1. An arrangement comprising a drawer (1, 2) and an extension guide (3, 4) for the drawer (1, 2), wherein the drawer (1, 2) has a drawer container (8) and two front panels (9) connectable to the drawer container (8) and the drawer (1, 2) can be releasably fixed to the extension guide (3, 4) by way of a fixing device (5, 6) and the extension guide (3, 4) has at least a front and a rear latching position (E₁, E₂) for fixing the drawer (1, 2), **characterized in that** the drawer (1, 2) has a front panel (9) for a front pull-out extension (F) or a front panel (9) for an internal pull-out arrangement, wherein only one of the two front panels (9) has an abutment (7), wherein the respective drawer (1, 2) is latched or fixed, respectively, in dependence of the front panel (9) for the internal pull-out arrangement (I) or of the front panel (9) for the front pull-out extension (F) in the rear (E₁) or front latching position (E₂), wherein the latching position (E₁, E₂) is established by the abutment (7) which is arranged on the front panel (9).

2. The arrangement according to claim 1, **characterized in that** the latching position (E₁, E₂) is established by the abutment (7) which is arranged on a connecting element (10) of the front panel (9).

3. The arrangement according to claim 1 or 2, **characterized in that** a drawer (1, 2) comprising a front panel for a front pull-out arrangement (F) is latched in the rear latching position (E₁) and a drawer (1, 2) comprising a front panel for the internal pull-out arrangement (I) is latched in the front latching position (E₂).

4. An article of furniture (19) comprising:
- a furniture carcass (17) and
- at least one arrangement according to one of claims 1 to 3.

5. The article of furniture according to claim 4, **characterized in that** the arrangement comprises a first drawer (1) and a second drawer (2) and two extension guides (3, 4) fixed in a mutually superposed relationship to the furniture carcass (17), wherein the first drawer (1) has a front panel for the front pull-out arrangement (F) in the form of an increased-height front panel (9) which covers over the second drawer (2) provided with a front panel for an internal pull-out arrangement (I), wherein the container (8) of the second drawer (2) is latched to the rear, further inwardly disposed latching position (E₁) of the one extension guide (3) and the container (8) of the first drawer (1) is latched to the front, further forwardly disposed latching position (E₂) of the other extension guide (4).

6. The article of furniture according to claim 4 or 5, **characterized in that** the extension guides (3, 4) fixed in a mutually superposed relationship to the furniture carcass (17) are fixed to the furniture carcass (17) in the same vertical position (V).

## Revendications

1. Agencement avec un tiroir (1, 2) et un guidage d'extraction (3, 4) pour le tiroir (1, 2), dans lequel le tiroir (1, 2) présente un contenant de tiroir (8) et deux panneaux avant (9) pouvant être reliés au contenant (8) et le tiroir (1, 2) peut être fixé par le biais d'un dispositif de fixation (5, 6) de manière amovible au guidage d'extraction (3, 4) et le guidage d'extraction (3, 4) présente au moins une position d'encliquetage arrière et une position d'encliquetage avant (E₁, E₂) pour la fixation du tiroir (1, 2), **caractérisé en ce que** le tiroir (1, 2) est pourvu d'un panneau avant (9) pour une rallonge avant (F) ou un panneau avant (9) pour une rallonge intérieure, dans lequel seul l'un des deux panneaux avant (9) présente une butée (7), dans lequel le tiroir (1, 2) respectif est encliqueté ou fixé en fonction du panneau avant (9) pour la rallonge intérieure (I) ou du panneau avant (9) pour la rallonge avant (F) dans la position d'encliquetage arrière (E₁) ou avant (E₂), dans lequel la position d'encliquetage (E₁, E₂) est définie par la butée (7) qui est réalisée au niveau du panneau avant (9).

2. Agencement selon la revendication 1, **caractérisé en ce que** la position d'encliquetage (E₁, E₂) est définie par la butée (7) qui est réalisée au niveau d'un élément de liaison (10) du panneau avant (9).

3. Agencement selon la revendication 1 ou 2, **caractérisé en ce qu'**un tiroir (1, 2) s'encliquette avec un panneau avant pour la rallonge avant (F) dans la position d'encliquetage (E₁) arrière et un tiroir (1, 2) avec un panneau avant pour la rallonge intérieure (I) dans la position d'encliquetage (E₂) avant.

4. Meuble (19) avec :
- un corps de meuble (17) et
- au moins un agencement selon l'une quelconque des revendications 1 à 3.

5. Meuble selon la revendication 4, **caractérisé en ce que** l'agencement présente un premier tiroir (1) et un deuxième tiroir (2) et deux guidages d'extraction (3, 4) fixés l'un au-dessus de l'autre au corps de meuble (17), dans lequel le premier tiroir (1) présente un panneau avant pour la rallonge avant (F) sous la forme d'un panneau avant (9) rehaussé qui recouvre le deuxième tiroir (2) pourvu d'un panneau avant pour la rallonge intérieure (I), dans lequel le contenant (8) du deuxième tiroir (2) est encliqueté au niveau de la position d'encliquetage (E₁) arrière plus intérieure de l'un guidage d'extraction (3) et le contenant (8) du premier tiroir (1) est encliqueté au niveau de la position d'encliquetage (E₂) avant plus vers l'avant de l'autre guidage d'extraction (4).

6. Meuble selon la revendication 4 ou 5, **caractérisé en ce que** les guidages d'extraction (3, 4) fixés l'un au-dessus de l'autre au corps de meuble (17) sont fixés dans la même position verticale (V) au corps de meuble (17).
